# EUROPEAN PATENT APPLICATION

(11) **EP 4 631 598 A1**
(43) Date of publication of application: **15.10.2025**
(21) Application number: 25167649.0
(22) Date of filing: 01.04.2025
(51) Int. Cl.: B01D 46/00, B01D 46/10, B01D 46/52

(54) **FILTER FRAME WITH A CLAMPING STRUCTURE**

(30) Priority: 10.04.2024 TW 113113363
(71) Applicant: YE SIANG ENTERPRISE CO., LTD., NEW TAIPEI CITY (TW)
(72) Inventor: WU, Chien-Ta, NEW TAIPEI CITY (TW); HUNG, Sheng-Huei, NEW TAIPEI CITY (TW); CHUANG, Po-Sheng, NEW TAIPEI CITY (TW)
(74) Representative: Becker, Eberhard

(57) **Abstract**

A filter frame with a clamping structure includes a frame (10) and multiple side walls (15) formed on the inner looped side. Each side wall (15) is adjacent to the front side (13) and the rear side (14) respectively. There are two clamping members (20) respectively placed on the inner looped sides of the left side and the right side of the frame (10). The clamping members (20) are configured to clamp the filter material (50) within the frame (10). Therefore, when the filter material (50) is placed in the frame (10), the clamping members (20) on both sides can extend into the space between the two closest pieces of the filter material (50) on both sides, allowing the closest piece of the filter material (50) to be clamped and tightly attached to the short frame bars (12).

## Description

The present invention relates to a frame structure, especially to a filter frame with a clamping structure for installing a filter.

The conventional filter material, especially the sheet-shaped and zigzag folding filter material, is usually fixed in a frame, and then the frame is fixed to a base of a filter device. The frame is rectangular with two long frame bars and two short frame bars. An inner looped side of the frame is grooved. The material is set in the frame, and the material and the frame are glued for adhesion.

However, when the filter material is placed in the frame, the gap between the filter material and the frame is very small, which makes the gluing process more difficult. For example, the gluing nozzle must be inserted into the gap between the filter material and the frame for smooth gluing, but during the insertion process, the filter material and the frame are subjected to extrusion, which will easily lead to breakage, deformation, and even glue overflow.

To overcome the shortcomings, the present invention provides a filter frame with a clamping structure to mitigate or obviate the aforementioned problems.

The main objective of the present invention is to provide a filter frame with a clamping structure for quickly fixing the left and right sides of the filter material by installing two clamping members in the frame.

The filter frame with a clamping structure is configured to fix a filter material. The filter frame with a clamping structure has a frame and two clamping members.

The frame has a front side, a rear side and multiple side walls, the front side and the rear side being opposite sides of the frame. An inner looped side of the frame is located between the multiple side walls, each one of the side walls extends from the inner looped side and is adjacent to the front side and the rear side respectively.

The two clamping members are respectively mounted on the inner looped side of a left side and a right side of the frame and are configured to clamp the filter within the frame.

The clamping members can clamp the filter material and tighten the filter material to the short frame bar, so as to quickly fix the left and right sides of the filter material, replacing the conventional technology of gluing the two sides of the filter material to the short frame bar. Each one of the limiting plates abuts the upper and lower sides of the filter material, to strengthen the stability of the filter material in the width direction of the long frame bar, so that the filter material made of a softer material, with the bends aligned on the same line, can be arranged neatly and securely. The through-hole allows the glue to flow through during gluing, reducing the resistance of the glue to excessive flow in the width direction of the long frame bar. Because the four corners of the frame are covered by the covering plates, the inside folding part of the covering plate can avoid interference with the components used to fix the frame (e.g., rivets) when the user assembles the filter material. Meanwhile, the covering plate can also increase the resistance of the glue flowing to the corner, minimizing the overflow of glue caused by the glue in the corner.

Other objectives, advantages and novel features of the invention will become more apparent from the following detailed description when taken in conjunction with the accompanying drawings.

### In the drawings:

Fig. 1 is a perspective view of a filter frame with a clamping structure in accordance with the present invention;
Fig. 2 is an exploded view of the filter frame with a clamping structure in Fig. 1;
Fig. 3 is a perspective view of a clamping member of the filter frame with a clamping structure in Fig. 1;
Fig. 4 is a partial cross-sectional of the filter frame with a clamping structure in Fig. 1, shown in a state of use;
Fig. 5 is a schematic view of the filter frame with a clamping structure in Fig. 1, shown in a state of use; and
Fig. 6 is a partial exploded view of another embodiment in accordance with the present invention.

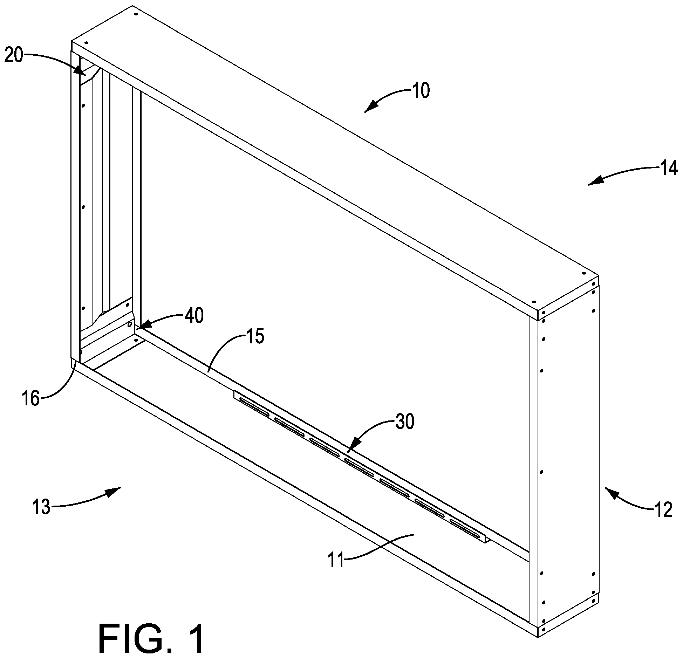

With reference to Fig. 1, a filter frame with a clamping structure in accordance with the present invention comprises a frame 10, two clamping members 20, multiple limiting plates 30 and multiple covering plates 40.

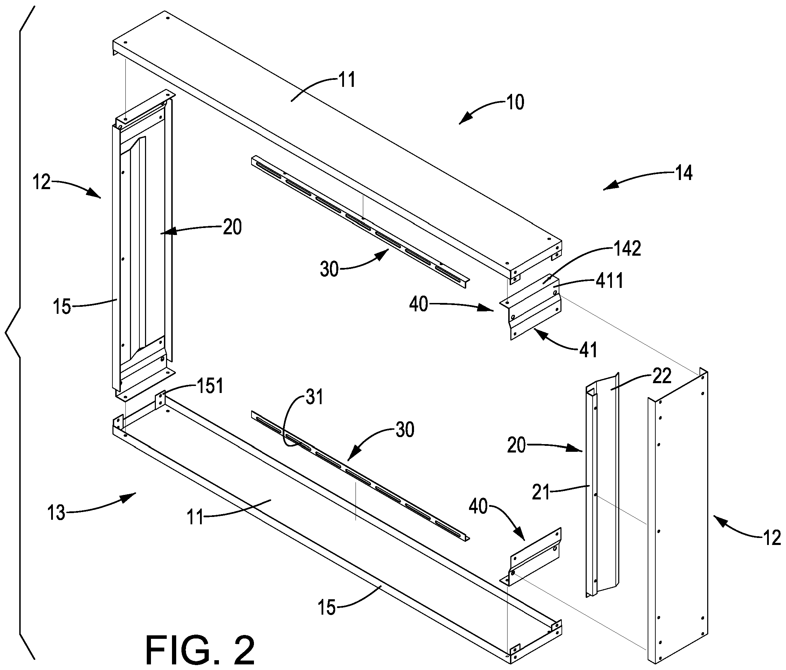

With reference to Fig. 1 and Fig. 2, the frame 10 comprises two long frame bars 11 and two short frame bars 12. The two long frame bars 11 and the two short frame bars 12 are connected to each other to form a rectangular frame, but the configuration of the frame 10 is not limited thereto. The frame 10 comprises a front side 13 and a rear side 14, and the front side 13 and the rear side 14 are opposite sides. The inner looped side of the frame 10 forms multiple side walls 15. Each one of the side walls 15 protrudes on the frame 10 and is adjacent to the front side 13 and the rear side 14, so the inner looped side of the frame 10 is grooved. Multiple horizontal joints 16 are formed between the connecting short frame bar 12 and long frame bar 11. In this embodiment, the two ends of each one of the side walls 15 located on the long side of the long frame bar 11 each comprise a respective folded plate 151. Each one of the folded plates 151 is parallel with the short frame bar 12 and fixed with the short frame bar 12. Precisely, the folded plate 151 is a sheet and bends and extends from the long side of the long frame bar 11 to the short side of the long frame bar 11. The folded plate 151 is fixed with the side wall 15 that is located on the short side and secured by means of a rivet (not shown in figures), but it is not limited thereto, as the folded plate 151 can also be omitted from the side walls.

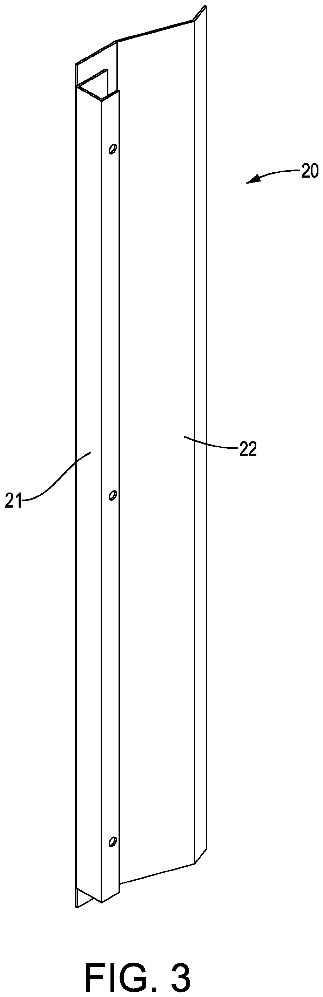

With reference to Fig. 1 to Fig. 3, the clamping member 20 comprises a connecting piece 21 and a clamping piece 22. The connecting piece 21 is an elongated piece with an inverted U-shaped cross-section. The clamping piece 22 is a curved piece with one end coupled to the connecting piece 21. Precisely, the connecting piece 21 is securely mounted on one of the short frame bars 12 and is adjacent to the front side 13 of the frame 10. Another end of the clamping piece 22 extends to the rear side 14, and the clamping piece 22 is bent to the short frame bar 12. The clamping piece 22 maintains a distance from the frame 10, but it is not limited thereto. The clamping piece 22 may not be bent, and the configuration of the clamping member 20 may be changed according to the user's needs, such as for one-piece molding. In another embodiment, the connecting piece 21 of the clamping member 20 can be an elongated piece with an L-shaped cross-section, one end of the connecting piece 21 is coupled to the clamping piece 22, and the other end of the connecting piece 21 is securely mounted on one of short frame bars 12 adjacent to the side wall 15 of the front side 13 of the frame 10.

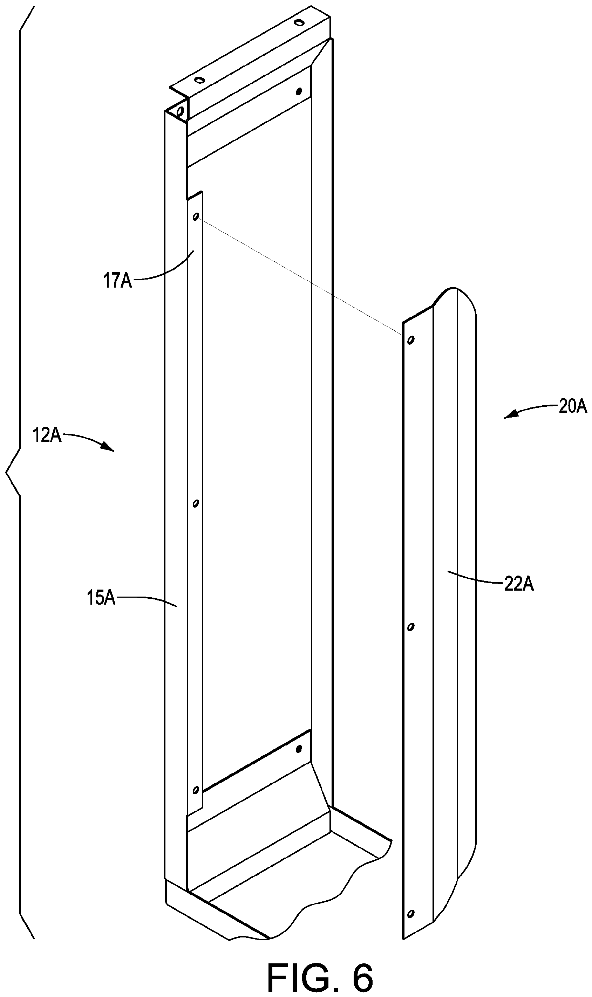

With reference to Fig. 2 and Fig. 6, in another embodiment, the clamping member 20A may be formed as a curved piece comprising only a clamping piece 22A, and a stationary piece 17A is formed on the side wall 15A of the short frame bar 12A adjacent to the front side 13 of the frame 10 and bent toward the rear side 14. One end of the clamping piece 22A is coupled to the stationary piece17A, and the other end of the clamping piece 22A extends toward the rear side 14. The clamping piece 22A is bent to the short frame bar 12A, but it is not limited thereto, as the clamping piece 22A may not be bent, which further reduces the weight of the frame and the quantity of rivets.

With reference to Fig. 1 and Fig. 2, the limiting plate 30 is an elongated bar with an L-shaped cross-section. The limiting plate 30 has at least one through-hole 31 formed therethrough. The limiting plate 30 is mounted on the inner surface of the long frame bar 11, and the through-hole 31 corresponds in position to each one of the side walls 15 located on the rear side 14. The limiting plate 30 is spaced from the side wall 15. In this embodiment, each one of the limiting plates 30 is parallel with the side walls 15 and has multiple through-holes 31 formed therethrough, and the through-holes 31 of each one of the limiting plates 30 are elongated through-holes. The through-holes 31 of the limiting plate 30 extend in the lengthwise direction of each one of the limiting plates 30 and are spaced apart from each other. However, it is not limited thereto, as the configuration of the limiting plate 30 may be changed according to the user's needs; for example, the through-hole 31 is an elongated through-hole extending to the two ends of the limiting plates 30.

The covering plate 40 is an elongated piece bent several times. The covering plate 40 comprises a first piece 41 and a second piece 42. The second piece 42 is a sheet bent about 90 degrees or 270 degrees from the first piece 41. An inside folding part 411 is located between the first piece 41 and the second piece 42, and the inside folding part 411 is a bending segment connected to the first piece 41 and protruding to the second piece 42, the inside folding part 411 being curved and protruding inward. In this embodiment, there are four said covering plates 40, such that each one of the covering plates 40 is fixed to the four corners of the frame 10 respectively, and the covering plates 40 are connected to the connecting long frame bar 11 and short frame bar 12. The clamping member 20 is assembled between the two covering plates 40 in the upper and lower positions. The inside folding part 411 of the first piece 41 of the covering plate 40 is fixed to form a partition space with the short frame bar 12 and the long frame bar 11, but it is not limited thereto, as the inside folding part 411 may also be omitted.

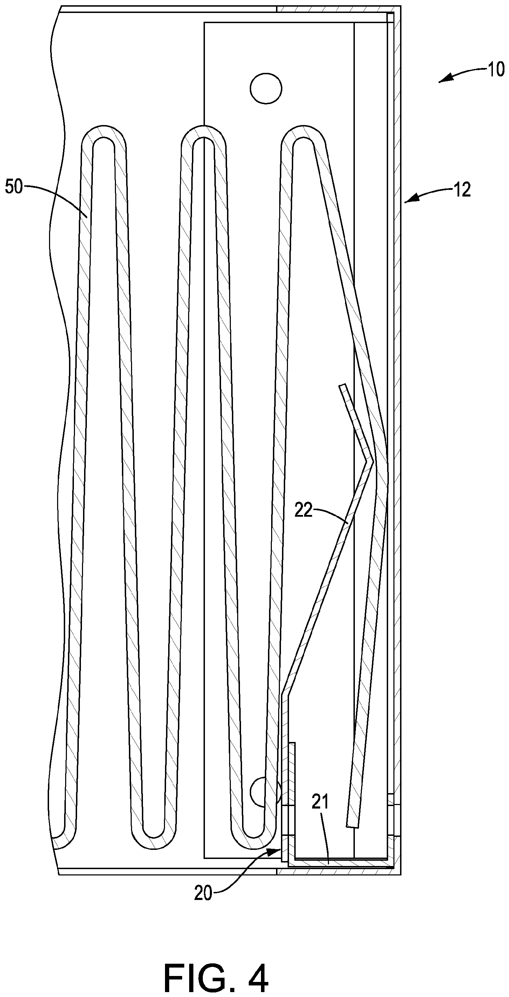

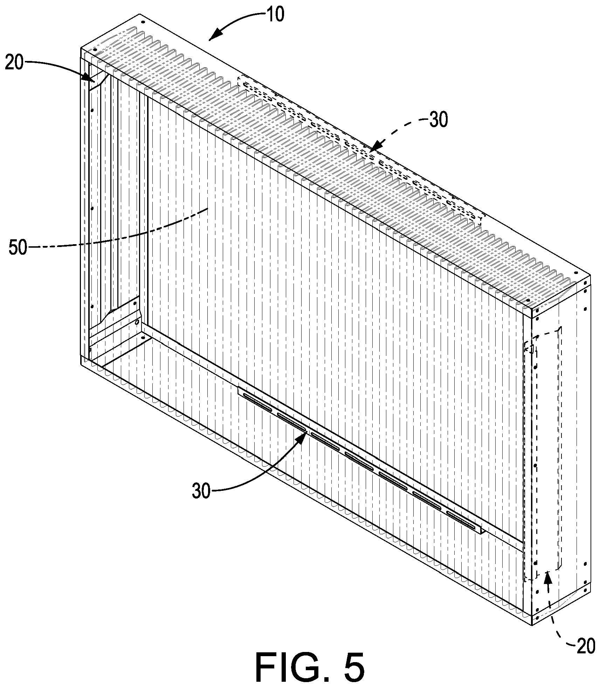

When the present invention is assembled, with reference to Fig. 1 to Fig. 5, a filter material 50 is placed in the frame 10, and the filter material 50 is located in the groove formed by the frame 10. Extend the clamping pieces 22 of the clamping members 20 on both sides of the frame 10 into the space between the two nearest pieces of the filter material 50 on both sides of the frame 10, respectively. Because the clamping piece 22 is made by flexible sheets, the clamping piece 22 can clamp the piece closest to the filter material 50 and tighten the piece to the short frame bar 12, so as to quickly fix the left and right sides of the filter material 50, replacing the conventional technology of gluing the two sides of the filter material 50 to the short frame bar 12. Each one of the limiting plates 30 abuts the upper and lower sides of the filter material 50, to strengthen the stability of the filter material 50 in the width direction of the long frame bar 11, so that the filter material 50 made of a softer material, with the bends aligned on the same line, can be arranged neatly and securely. The through-hole 31 allows the glue to flow through during gluing, reducing the resistance of the glue to excessive flow in the width direction of the long frame bar 11.

In the aforementioned process, the horizontal joint 16 at the intersection of the long frame bar 11 and the short frame bar 12 is located on the top of the side wall 15 of the long frame bar 11, the horizontal joint 16 is spaced apart from the long frame bar 11, the long frame bar 11 is also formed within the folded plate 151, reducing the glue flowing to the corner, which may make the glue flow from the seam to the outside to cause overflow.

In the aforementioned process, because the four corners of the frame 10 are covered by the covering plates 40, and the inside folding part 411 of the covering plate 40 can avoid interference with the components used to fix the frame 10 (e.g., rivets) when the user assembles the filter material 50. Meanwhile, the covering plate 40 can also increase the resistance of the glue flowing to the corner, minimizing the overflow of glue caused by the glue in the corner.

## Claims

1. A filter frame with a clamping structure configured to fix a filter material (50), and **characterized in that** the filter frame comprises:
a frame (10) having a front side (13) and a rear side (14), the front side (13) and the rear side (14) being opposite sides; the frame (10) comprising multiple side walls (15), an inner looped side of the frame (10) located between the side walls (15), each one of the side walls (15) extending from the inner looped side and being adjacent to the front side (13) and the rear side (14) respectively;
two clamping members (20) respectively mounted on the inner looped side of a left side and a right side of the frame (10) and configured to clamp the filter material (50) within the frame (10).

2. The filter frame as claimed in claim 1, wherein each one of the clamping members (20) comprises a connecting piece (21) and a clamping piece (22); one end of the clamping piece (22) is coupled to the connecting piece (21), the connecting piece (21) is securely mounted on the frame (10), and the clamping piece (22) maintains a distance from the frame (10), thereby clamping the filter material (50).

3. The filter frame as claimed in claim 2, wherein the frame (10) comprises two long frame bars (11) and two short frame bars (12), the two long frame bars (11) and the two short frame bars (12) are connected to each other to form a rectangular frame;
each one of the connecting pieces (21) of the clamping members (20) is securely mounted on one of the short frame bars (12) and is adjacent to the front side (13) of the frame (10), and another end of the clamping piece (22) extends to the rear side (14).

4. The filter frame as claimed in claim 1, wherein the frame (10) comprises two long frame bars (11) and two short frame bars (12), the two long frame bars (11) and the two short frame bars (12) are connected to each other to form a rectangular frame;
each one of the short frame bars (12) comprises a stationary piece (17A), the stationary piece (17A) located on one of the side walls (15) that is adjacent to the front side (13) and extends to the rear side (14);
each one of the clamping members (20) comprises a clamping piece (22), one end of the clamping piece (22) of each one of the clamping members (20) is securely mounted on one of the stationary pieces (17A), and another end of the clamping piece (22) extends to the rear side (14).

5. The filter frame as claimed in any one of claims 1 to 4 further comprising multiple limiting plates (30), each one of the limiting plates (30) being parallel with the side walls (15) and having at least one through-hole (31) formed therethrough; each one of the limiting plates (30) mounted on the inner looped side of the frame (10), and adjacent to the front side (13) or the rear side (14).

6. The filter frame as claimed in claim 5, wherein each one of the limiting plates (30) has multiple through-holes (31) formed therethrough, the through-holes (31) of each one of the limiting plates (30) are elongated through-holes (31), and the through-holes (31) extend in a lengthwise direction of each one of the limiting plates (30) and are spaced apart from each other.

7. The filter frame as claimed in claim 3 or 4 further comprising multiple covering plates (40), each one of the covering plates (40) mounted on the long frame bar (11) and the short frame bar (12), and each one of the covering plates (40) covering the inner looped side at each corner between the long frame bar (11) and the short frame bar (12).

8. The filter frame as claimed in claim 7, wherein each one of the covering plates (40) comprises a first piece (41) and a second piece (42), the second piece (42) is connected to the first piece (41) and securely mounted on the long frame bar (11), and the first piece (41) is securely mounted on the short frame bar (12).

9. The filter frame as claimed in claim 8, wherein each one of the covering plates (40) comprises an inside folding part (411) connecting the first piece (41) and the second piece (42); the inside folding part (411) being curved and protruding inward; a partition space is formed between the inside folding part (411) of one of the covering plates (40), and the short frame bar (12) and the long frame bar (11) connected to said covering plate (40).

10. The filter frame as claimed in claim 9, wherein two ends of the two long frame bars (11) further comprise multiple folded plates (151), and each one of the folded plates (151) is parallel with the short frame bar (12) and fixed with the short frame bar (12).
